# EUROPEAN PATENT APPLICATION

(11) **EP 1 238 615 A2**
(43) Date of publication of application: **11.09.2002**
(21) Application number: 02251511.8
(22) Date of filing: 05.03.2002
(51) Int. Cl.: A47J 31/047

(54) **Electric infusion beverage maker**

(30) Priority: 05.03.2001 GB 0105385
(71) Applicant: STRIX LIMITED, Ronaldsway, Isle of Man IM9 2RG (GB)
(72) Inventor: Scott, Michael James, Port St Mary, Isle of Man IM9 5PH (GB)
(74) Representative: Leckey, David Herbert

(57) **Abstract**

A tea making appliance 2 comprises a water heating vessel 4 provided with a thick film heater 24 on its base 20 and an infusion vessel 6 arranged thereon, containing in use a dose of tea leaves. A tube 8 extends down from the infusion vessel 6 into water heating vessel 4. As water in the water heating vessel 4 is heated, the vapour pressure in the vessel 4 increases, with vapour escaping from the vessel 4 through a valve unit 46. When the water begins to boil, a ball 50 in the valve unit 46 is forced by the vapour pressure against its seat 54 to close the valve, forcing heated water to flow through tube 8 into the infusion vessel 6. Once transfer of the water is complete, a control unit 72 operates to disconnect the power supply to the heater 24. The steam pressure in the water heating vessel 4 begins to fall, and valve 46 reopens, allowing infused tea to flow back into the water heating vessel 4.

## Description

The present invention relates to electric infusion beverage makers, and in particular, but not exclusively, to electric tea makers.

The traditional method for making tea is to boil water in a kettle, place tea leaves or, more commonly, tea bags into a teapot and to then pour the boiling water onto the tea leaves or tea bag in the teapot. The beverage is then left to infuse for a certain amount of time, after which time it is poured for consumption.

The present invention seeks to provide a beverage maker which will allow an infusion beverage such as tea to be made easily and consistently, and from a first aspect provides an electric infusion beverage maker comprising a water heating vessel having electrical heating means associated therewith for heating water in the vessel, an infusion vessel mounted on said heating vessel for receiving a dose of infusion, a tube extending down from the infusion vessel into said heating vessel for transferring heated water from the heating vessel to the infusion vessel, said water heating vessel having valve means associated therewith, said valve means being configured and arranged such that when water in said water heating vessel boils, the valve closes so as to force water up said tube into said infusion vessel under pressure, and when all, or a substantial amount of the water in the lower vessel has evaporated or been transferred to the infusion vessel, said valve opens so as to permit infused beverage to return under gravity into said water heating vessel.

In this way boiling, or substantially boiling water is forced from a water boiling vessel into an infusion vessel under the pressure of steam produced when the water boils. There it infuses with a dose of infusion. When most or all of the water in the heating vessel has evaporated away or been forced up into the infusion vessel, the valve opens so as to vent the heating vessel to atmosphere thereby allowing infused beverage to return to the heating vessel under gravity for dispensing. The quality of the infused beverage is high, since only substantially boiling water is admitted to the infusion vessel. Furthermore, when in the heating vessel the infused beverage does not stew, being out of contact with the infusion material. All this leads to a better, more consistent quality of beverage.

Such an arrangement is similar in some respects to the arrangement disclosed in WO 00/30514 which relates to a vacuum coffee maker, except that the back flow is not forced, but purely by gravity. This has a number of advantages, not least of which being that the water heating vessel need not be vacuum capable.

The valve means may be temperature activated, or in other embodiments it may be pressure activated whereby the valve is actually closed by the pressure of the steam generated by the boiling water in the heating vessel, and opened once more when the pressure drops below a predetermined value which indicates that the water in the heating vessel has substantially evaporated or been transferred to the infusion vessel.

In a simple embodiment, the valve means comprises a ball valve which is closed against a seat by steam pressure in order to close the valve, and which may move away from the seat when the pressure drops after all or a substantial part of the water in the heating vessel has evaporated or transferred.

Depending on the orientation of the valve, it may return to an open position under gravity or under a spring force.

Preferably the valve exhausts into a handle or lid of the water heating vessel such that steam exhausting therefrom can be directed to a location where it will not scald a user.

The base of the liquid heating chamber is preferably provided with electric heating means and thermally responsive control means are provided associated with the said base so as to be responsive to the temperature of the heating means or a section of the base for interrupting the power supply to or reducing the heating output of the heating means. Such an arrangement is disclosed in broad terms in the aforementioned WO 00/30514.

In this way, when a desired amount of water in the water heating vessel has evaporated away, the temperature rise of the base causes the power to the heating means to be interrupted or the heating output thereof substantially reduced. This stops, or at least substantially reduces heating of the liquid in the lower chamber, so as to stop boiling, allowing pressure in the water heating vessel to drop, the valve means to open and infused beverage to flow back into the water heating vessel for dispensing.

The control means may be arranged to operate in the various ways envisaged in WO 00/30514. For example the control means may be arranged so as to detect when a portion of the base of the water heating vessel boils dry, which indicates that a predetermined amount of the water in the water heating vessel has been transferred to the infusion vessel. This condition can easily be detected by a suitable thermal sensor in thermal contact with the base or the heater since in the absence of water which cools the base or heater, the temperature of the base or heater will rise very quickly.

Preferably only a specified portion of the base or heater boils dry, such that water still covers the remainder of the base. This may be achieved in a number of ways. For example the base or heater may be provided with a locally raised region which boils dry, or the base or heater may be arranged to slope such that a peripheral region thereof will become exposed and overheat as the water level in the water heating vessel drops. A suitable sensor may be arranged under that part of the base or heater.

Preferably, however, the base is provided with a region which is separated from the remainder of the region by a wall. Most preferably, the wall surrounds the entire heated region of the base. This wall forms a reservoir of water above the heater in the base, and it will be appreciated that the higher this wall, the longer it will take for water within the reservoir to evaporate, and thus for the control to operate.

This allows a mechanism by which the beverage infusion time can be varied since that is dependent upon how long the water remains in the infusion vessel. This is dependent upon maintaining the pressure in the water heating vessel, which in turn depends on the continued boiling of liquid in the water heating vessel chamber.

To vary the infusion time, the wall may be adjustable in height. In a preferred embodiment, an adjustable weir is provided associated with the wall. This avoids the need for the whole wall to be variable in height, and so considerably simplifies manufacture. This is an advantageous arrangement in its own right, and can be applied both to gravity and vacuum infusion makers alike, so from a further aspect the invention provides a beverage maker comprising a water heating vessel, an infusion vessel mounted on said water heating vessel, a tube extending down from said infusion vessel into said water heating vessel for transferring liquid from the water heating vessel to the infusion vessel, the base of said water heating vessel being provided with electric heating means and thermally responsive control means are provided associated with the said base so as to detect when a portion of the base of the water heating vessel boils dry, said portion of said base being separated from the remainder of the base by a wall which defines a reservoir of liquid which must boil away before the control operates, and an adjustable height weir associated with said wall to vary the effective height thereof.

The weir may comprise a movable part of the wall itself, for example a slidable plate provided in the wall. However, such an arrangement has potential sealing problems, may be liable to scaling up and is potentially inadvertently damageable by a user. Preferably, therefore, the surface of the wall facing the reservoir is provided with a fixed outlet, and a variable weir arranged within the wall, connected to that outlet. This has the advantage that the weir arrangement is not exposed and is therefore less liable to accidental damage, and is potentially aesthetically more pleasing.

Preferably the weir comprises a passage of which at least a section is raisable or lowerable. Preferably, therefore, the passage comprises one or more sections of flexible tubing. The movable section of the passage may be arranged to slide in guides and preferably comprises a sliding block which is suitably coupled to the section(s) of tubing.

The movable section of the passage may be moved by any suitable mechanism, for example a rotary cam coupled to a control knob or the like operated by a user.

As stated above, the heating means may comprise any suitable heater. It should, however, be sufficiently powerful to bring the water in the water heating vessel to boiling. In order to boil the water relatively quickly, the heating means may be relatively powerful, for example 2 to 3 kW. However, this may result in the infusion time being relatively short, since water retained in the evaporation reservoir will be rapidly evaporated by the heater. Accordingly, it would be desirable to have a lower power heating means, say 500-1000W, to evaporate this water, thereby prolonging the infusion time. Accordingly in a preferred embodiment the heating means may comprise higher power heating means for bringing water in the water heating vessel to the boil and lower power heating means for continuing to evaporate said water after boiling, and the beverage maker further comprise control means to switch from said higher power to the lower power heating means upon water boiling in the water heating vessel.

This is in itself applicable to both gravity and vacuum devices, so from a further aspect the invention provides a beverage maker comprising a water heating vessel, an infusion vessel mounted on said water heating vessel, a tube extending down from said infusion vessel into said water heating vessel for transferring liquid from the water heating vessel to the infusion vessel, the base of said water heating vessel being provided with electric heating means, said heating means comprising higher power heating means for boiling water in the water heating vessel and secondary heating means for continuing to evaporate water after it has been brought to the boil, and further comprise control means to switch from said higher power to said lower power heating means upon water boiling in the water heating vessel.

The switching control may comprise any boiling sensitive control. For example boiling may be sensed via a portion of the base of the vessel, for example by using a system as disclosed in GB 2,283,155 or in WO96/01875 and WO98/36616. Preferably however it comprises a steam-sensitive control. Such controls are widely available, for example the Applicant's R48 control.

The steam-sensitive control can be provided in any suitable location, so long as it is exposed to steam produced in the water heating vessel. It can be associated with the boiling sensitive valve referred to earlier.

For example, it may be arranged in fluid communication with the outlet of the boiling sensitive valve, whereby it will receive steam from the water heating vessel as it begins to boil, but will switch off before the steam pressure builds up to close the valve.

In another embodiment, the steam sensitive switch may actually comprise part of the valve means. In such an embodiment, the steam switch may be coupled to a valve member which moves to open or close a valve opening. This member may be a flap or the like which moves across the opening.

The valve opening should not be completely closed in such an arrangement since the steam switch will not usually reset automatically to re-open the valve after the water in the water heating vessel has boiled away. Accordingly a vent should be provided so that the water heating vessel will be vented to atmosphere so as to allow the infused beverage to return to the water heating vessel. The vent hole should be sufficiently small that it will effectively choke when water boils in the water heating vessel, causing the pressure to build up in the water heating vessel to force liquid up the tube into the infusion vessel.

A similar arrangement could be used in vacuum infusion makers but in such appliances, the valve opening would have to be sealed completely so as to allow a vacuum to develop in the water heating vessel to suck back infused beverage from the infusion vessel. The valve could then be reopened manually when the steam switch is reset by a user.

The concept of providing a small vent opening which causes pressure to build up during boiling but vents the water heating vessel after boiling has finished can be applied to a single power heating appliance. In that case, there is no steam sensitive switch, but merely a vent opening provided in a suitable part of the water heating vessel. In other words, the valve means of the appliance may merely comprise a vent hole.

Some preferred embodiments of the invention will now be described by way of example only with reference to the accompanying drawings in which:
Figure 1 shows a schematic partial cross section through a teamaker in accordance with a first embodiment of the invention;
Figure 2 shows, schematically a detail of a part of Figure 1;
Figures 3A and 3B show a further embodiment of the invention in two states of operation;
Figure 4 shows the electrical circuit for the embodiment of Figure 1; and
Figure 5 shows, schematically, a further detail of a teamaker in accordance with the invention.

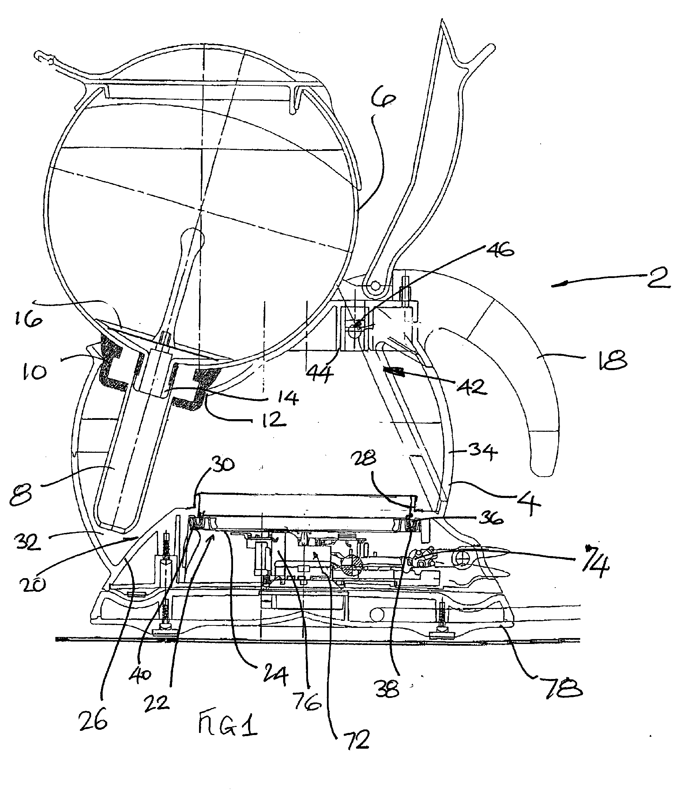

With reference to Figure 1, a tea making appliance 2 comprises a water heating vessel 4 and an infusion vessel 6 mounted thereon. Both the water heating vessel 4 and infusion vessel 6 are preferably made from a transparent or translucent material such as glass or plastics.

The infusion vessel 6, which in use will contain dose of infusion, more particularly tea leaves, is provided with a tube 8 which extends down into the water heating vessel 4. The tube 8 is mounted in a sealing bung 10 which is mounted in the spout 12 of the water heating vessel 4. The tube 8 fits sealingly onto a spigot 14 formed at the base of the infusion vessel 6.

A filter 16, e.g. of a metallic or plastics mesh 16 is supported across the lower part of the infusion vessel 6 so as to permit heated water to enter the infusion vessel 6 from the water heating vessel 4 and thereafter to allow infused beverage to flow back into the water heating vessel 4 while retaining spent tea leaves.

The water heating vessel 4 is provided with a handle 18 to facilitate pouring beverage therefrom.

The water heating vessel 4 has a base 20 which has an electrically heated portion 22 formed by a thick film heater 24. The base is formed as a plastics moulding 26, for example of nylon, having a central circular opening 28 for receiving the heater 24, with an upstanding wall 30 arranged around the opening 28. The moulding 26 is also formed with a well 32 for receiving the lower end of the tube 8. The moulding 26 may either be a separate moulding mounted to close the bottom of the water heating vessel 4 or be formed integrally with a lower part 34 of the water heating vessel.

The peripheral channel 36 of the thick film heater 24 is clamped onto a downwardly extending skirt 38 of the moulding 26 with an interposed seal 40, in the manner described in WO 96/18331.

The upper part 42 of the water heating vessel 4 is provided with a port 44 which leads from the interior space of the vessel 4 into the handle 18. The port 44 includes a valve unit 46 of which greater detail can be seen in Figure 2. In particular, the valve unit comprises a moulded sleeve 48 inside which is mounted a ball 50. The ball 50 is retained in the sleeve by a number of fingers 52 extending upwardly from the base of the sleeve. A valve seal 54 is provided at the upper end of the sleeve 48. The sleeve 48 and ball 50 are sized such that when the ball 50 is resting on the fingers 52 vapour generated in the vessel 4 can escape through the valve. However when the ball 50 is pressed against the seat 54 no vapour can escape.

The valve 46 exhausts into a steam chamber 56 which houses a steam sensitive switch 58, such as one of the Applicant's R48 switches. A shown schematically, this switch comprises a snap acting bimetallic actuator 60 which acts upon a trip lever 62 which in use is coupled to a knob (not shown) for operation by a user. As will be described further below, the switch 58 is connected to the heater 24 via a terminal 64 an flying leads (not shown). Vapour which enters the chamber 56 passes over the actuator 60 and is then exhausted into the handle 18.

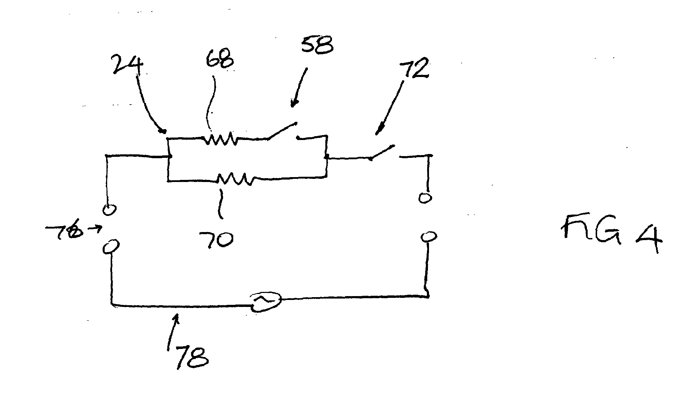

The thick film printed heater 24 is of a conventional construction, having two heating tracks, 68, 70 (Figure 4) arranged in parallel. Both tracks are rated at about 750W. A thermally sensitive control unit 72 is mounted to the underside of the heater 24. The control unit 46 is the Applicant's commercially available U28 control unit which comprises, inter alia, a pair of snap acting bimetallic actuators operable at substantially the same temperature and which in use will engage spaced apart regions of the heater, a pair of spring contacts which make contact with terminals of the heating tracks, and an on/off lever 74. The U28 is itself an adaptation of the Applicant's U18 control for use with thick film heaters. The U18 is described at length in WO 95/34187 and reference should be made for details of its mode of operation.

The control unit 72 also incorporates a cordless electrical connector 76 which will allow power to be supplied to the heater 24 when the lower vessel is placed on a power supply stand 78.

As can be seen from Figure 4, the steam sensitive switch 58 is placed in series with the heater track 68 such that when it operates this track 68 is disconnected from the power supply, but track 70 is still energised. The control 72, however, is arranged such that when it operates both tracks are disconnected from the power supply.

The operation of the above embodiment will now be described. Firstly, tea leaves are placed in the infusion vessel 6 and water in the water heating vessel 4. The water heating vessel 4 is then placed on the power supply stand 78, and both heater tracks 68, 70 turned on by pressing on their respective operating knobs.

The water in water heating vessel 4 rises in temperature and as it does so, the vapour pressure will begin to increase in the water heating vessel 4. However, vapour will be able to escape from the vessel through the valve unit 46. As the water approaches its boiling point or begins to boil, the amount of steam generated increases significantly. The steam escaping through the valve 46 first acts to operate the switch 46 to reduce the heating power of the heater by disconnecting the heater track 68. The steam pressure continues to build as the water boils to the extent that it pushes the ball 50 against its seat 54 to close the valve 46. Water in the water heating vessel 4 is then forced up the tube 8 through the filter 16 and into the infusion vessel 6.

The level of water in the water heating vessel will very rapidly fall to the upper edge of the wall 30 around the heater 26. This wall 30 acts as a reservoir to contain a pool of water which will continue to boil for a period of time determined by the height of the wall 30. Effectively, the higher the wall 30 the longer the liquid in the reservoir will boil which in turn means the longer will be maintained the pressure in the water heating vessel 4. This in turn means that the water will remain for a longer period in the infusion vessel 6, thereby giving longer infusion.

When the reservoir has boiled dry, the heater 24 will rise very quickly in temperature and this rise is detected by one or both of the actuators of the control unit 72 which will then operate in a known manner to switch off the power supply to both heater tracks 68, 70.

In time, the steam pressure in the water heating vessel 4 will fall, allowing the valve 46 to open once more, meaning that infused tea can flow back from the infusion vessel 6 through the filter 16 back into the water heating vessel 4. The infusion vessel 6 can then be removed and tea dispensed from the water heating vessel.

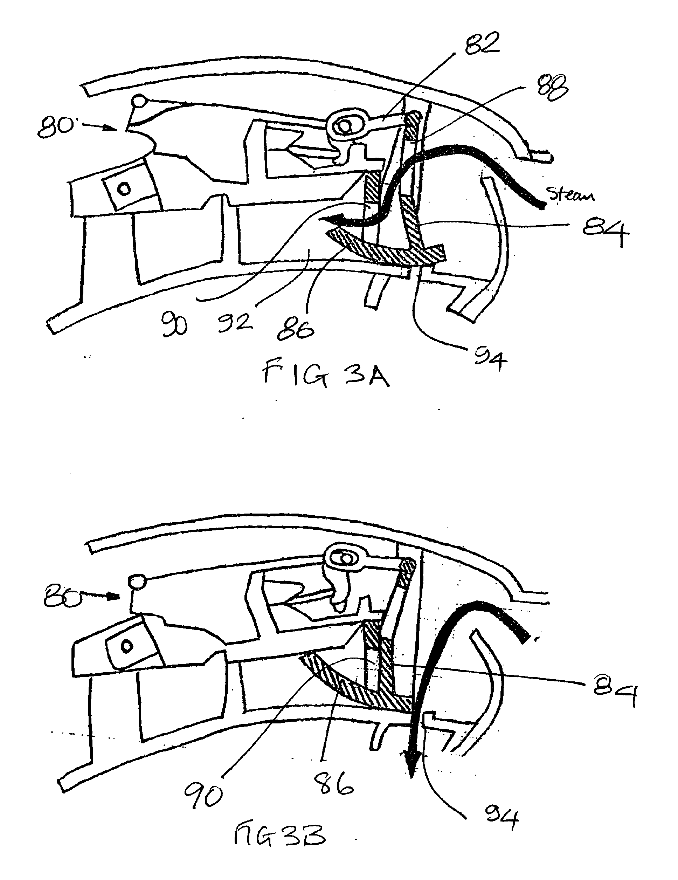

Figures 3A and 3B show a modification of the embodiment of Figure 2.

In this embodiment, a steam sensitive switch 80 is incorporated in the valve mechanism. In particular, the steam sensitive switch (e.g. the Applicant's R48 switch) is coupled to a valve member 82. The valve member 82 is a pivotally mounted, generally L-shaped, shutter having an upper limb 84 and an arcuate lower limb 86. The upper limb 84 is formed with an aperture 88.

The shutter is movable between the two positions shown in Figures 3A and 3B respectively. In the first position shown in Figure 3A, steam from the water heating vessel can flow through the aperture 88 into a steam chamber 92 below the switch 80 through an aperture 90. The lower limb 86 meanwhile blocks off a vent hole 94. When sufficient steam has reached the steam chamber 92, the switch 80 operates to reduce the power of the heater and also to move the shutter 82 to the position shown in Figure 3B. In this position, the upper limb 84 blocks the aperture 90, thereby preventing steam escaping through the steam switch 80. However, the lower limb 86 exposes the vent hole 94. This hole 94 is sized such that when the water in the water heating vessel boils or approaches its boiling point, the steam cannot escape quickly enough through the hole 94 and the pressure builds up in the water heating vessel so as to push the water up the tube into the infusion vessel. However, when the water in the water heating vessel has stopped boiling, the hole acts as a vent to atmosphere allowing the infused beverage to return to the water heating vessel under gravity.

The steam venting through the vent hole 94 or exiting the switch 80 can be suitably channeled into, for example, the handle or lid of the appliance to prevent it exhausting onto a user.

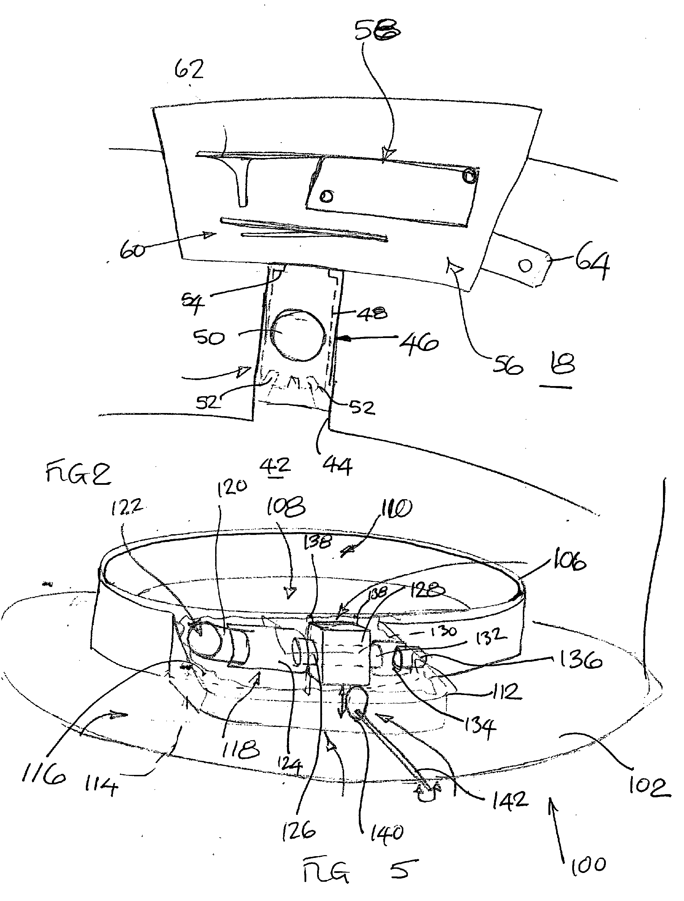

As mentioned above, the infusion time for the beverage is dependent on how long it takes for water to be evaporated from the reservoir defined by the wall 30. This depends, inter alia, on the effective height of the wall. If it desired to vary the infusion time, then the effective height of the wall may be varied to achieve this. Figure 5 shows one way in which this may be achieved.

Figure 5 shows the base region 100 of a water heating vessel. This includes a base moulding 102 suitably secured in the bottom of the vessel 104. An upstanding wall 106 is formed in the base moulding 102 around an opening 108, which is closed in use by a heater, not shown. The heater and the wall 106 define a reservoir 110.

A weir housing 112 which extends laterally from the wall 106 is also moulded into the base moulding 102. It has an open bottom 114 and a sloping upper surface 116.

The weir housing 112 houses a weir 118. The weir comprises a number of components as follows. The upper surface 116 of the weir housing has been shown cut away in Figure 5 so as to show these components. An inlet passage 120, which is preferably formed integrally with the wall 102 opens into the reservoir 110 thorough an opening 122 in the wall 106. A flexible silicone rubber tube 124 is fitted onto the inlet passage 120 at one end and onto a mounting spigot 126 projecting from a block 128 at its other end. The block 128 is formed with a through passage 130 and is provided with a second spigot 132 onto which is pushed or clipped a second flexible silicone rubber tube 134. That tube 134 is push or otherwise fitted at its other end onto a passage 136 which is preferably integrally moulded with the housing 112 and which opens into the region of the base moulding 102 outside the reservoir 110.

The block 128 is mounted for vertical movement in the housing 112. In particular, it is guided vertically by a number of guides 138. The vertical movement is effected via a rotary cam 140 which cooperates with the undersurface of the block 128. The block is raised or lowered by rotation of a control rod 142 coupled to the cam 140 and which extends in use outside the vessel for manipulation by a user.

It will be understood that as the block 128 is raised or lowered, it effectively varies the height of the wall 106 by requiring the water flowing thorough the weir passage to pass over a higher or lower threshold defined by the lower surface of the passage 130 through the block. The higher this threshold, the more water will be retained in the reservoir to be boiled away by the heater 70, and the longer the infusion time will be. Infusion times of between 200 and 400 seconds have been achieved using this system.

It will be appreciated that the weir and steam switch arrangements described above can be used with vacuum infusion makers of the kind described in WO 00/30514 as well as gravity beverage makers. For example the embodiment of Figure 3 may be modified for use in a vacuum machine by dispensing with the vent hole 94.

Also, various modifications may be made to the embodiments described without departing from the scope of the invention. For example the steam switch may be dispensed with and a single heater be employed. Also, a low power keep warm heater may be provided which will keep the infused beverage warm in the water heating vessel.

In some embodiments, the moulding need not have a wall raised above the heater, and the dishing of the heater as shown may provide sufficient depth to define a "boil-away" reservoir giving a reasonable infusion time.

Furthermore, it is possible that the steam sensitive switch and the underfloor control can be linked such that operation of the underfloor control acts to switch off both, but the steam sensitive switch can switch off independently. A two-part single operating knob mechanism which achieves this and which allows both switches to be switched back on together is described in our co-pending international application PCT/GB00/04095.

## Claims

1. An electric infusion beverage maker comprising a water heating vessel having electrical heating means associated therewith for heating water in the vessel, an infusion vessel mounted on said heating vessel for receiving a dose of infusion, a tube extending down from the infusion vessel into said heating vessel for transferring heated water from the heating vessel to the infusion vessel, said water heating vessel having valve means associated therewith, said valve means being configured and arranged such that when water in said water heating vessel boils, the valve closes so as to force water up said tube into said infusion vessel under pressure, and when all, or a substantial amount of, the water in the lower vessel has evaporated or been transferred to the infusion vessel, said valve opens so as to permit infused beverage to return under gravity into said water heating vessel.

2. An electric infusion beverage maker as claimed in claim 1 wherein said valve means is pressure activated, whereby the valve means is closed by pressure of steam generated by the boiling water in the water heating vessel.

3. An electric infusion beverage maker as claimed in claim 2 wherein said valve means comprises a ball valve.

4. An electric infusion beverage maker as claimed in claim 3 wherein the ball valve is returnable to an open position under gravity or a restoring spring force.

5. An electric infusion beverage maker as claimed in any of claims 1 to 4 wherein the steam outlet of the valve means is channeled into a handle or lid of the water heating vessel.

6. An electric infusion beverage maker as claimed in claim 1 wherein said valve means comprises a relatively small vent hole.

7. An electric infusion beverage maker as claimed in any preceding claim wherein the base of the water heating chamber is provided with electric heating means and thermally responsive control means are provided associated with the said base so as to be responsive to the temperature of the heating means or a section of the base for interrupting the power supply to or reducing the heating output of the heating means.

8. An electric infusion beverage maker as claimed in claim 7 wherein the control means is arranged to detect when a portion of the base of the water heating vessel boils dry.

9. An electric infusion beverage maker as claimed in claim 8 wherein the base is provided with a region which is separated from the remainder of the region by a wall, and the control means detects boiling dry of that region.

10. An electric infusion beverage maker as claimed in claim 9 wherein the effective height of the wall is variable.

11. An electric infusion beverage maker as claimed in claim 10 wherein an adjustable weir is provided associated with the wall.

12. An electric infusion beverage maker comprising a water heating vessel, an infusion vessel mounted on said water heating vessel, a tube extending down from said infusion vessel into said water heating vessel for transferring liquid from the water heating vessel to the infusion vessel, the base of said water heating vessel being provided with electric heating means and thermally responsive control means are provided associated with the said base so as to detect when a portion of the base of the water heating vessel boils dry, said portion of said base being separated from the remainder of the base by a wall to define a reservoir of liquid which must boil away before the control operates, and an adjustable height weir provided associated with said wall to vary the effective height thereof.

13. An electric infusion beverage maker as claimed in claim 11 or 12 wherein the weir comprises a movable part of the wall itself.

14. An electric infusion beverage maker as claimed in claim 11 or 12, wherein a surface of the wall facing the reservoir is provided with a fixed outlet, and a variable weir arranged within or behind the wall, connected to that outlet.

15. An electric infusion beverage maker as claimed in claim 14 wherein said weir comprises a passage of which at least a section is raisable or lowerable.

16. An electric infusion beverage maker as claimed in claim 15 wherein the passage comprises one or more sections of flexible tubing.

17. An electric infusion beverage maker as claimed in claim 15 or 16 wherein the movable section of the passage is arranged to move in guides.

18. An electric infusion beverage maker as claimed in claim 17 wherein the movable section comprises a sliding block.

19. An electric infusion beverage maker as claimed in any of claims 15 to 18 wherein the movable section of the passage is moved by a cam, more particularly a rotary cam.

20. An electric infusion beverage maker as claimed in any preceding claim wherein the heating means comprises higher power heating means for bringing water in the water heating vessel to the boil and lower power heating means for continuing to evaporate said water after boiling, and the beverage maker further comprises control means to switch from said higher power to the lower power heating means upon water boiling in the water heating vessel.

21. An electric infusion beverage maker comprising a water heating vessel, an infusion vessel mounted on said water heating vessel, a tube extending down from said infusion vessel into said water heating vessel for transferring liquid from the water heating vessel to the infusion vessel, the base of said water heating vessel being provided with electric heating means, said heating means comprising higher power heating means for boiling water in the water heating vessel and secondary heating means for continuing to evaporate water after it has been brought to the boil, and further comprising control means to switch from said higher power to said lower power heating means upon water boiling in the water heating vessel.

22. An electric infusion beverage maker as claimed in claim 20 or 21 wherein said control means comprises a steam-sensitive control.

23. An electric infusion beverage maker as claimed in claim 22 wherein the steam outlet of said steam-sensitive control is vented to a handle or lid of the water heating vessel.

24. An electric infusion beverage maker as claimed in any of claims 20 to 23 wherein said steam-sensitive control is associated with a boiling sensitive valve.

25. An electric infusion beverage maker as claimed in claim 24 as dependent directly or indirectly upon any of claims 1 to 5 wherein said steam-sensitive control is arranged in fluid communication with the outlet of the boiling sensitive valve.

26. An electric infusion beverage maker as claimed in claim 24 wherein said steam sensitive control is coupled to a valve member which selectively opens or closes a steam flow path.
